Europäisches Patentamt

European Patent Office

Office européen des brevets

(19)

(11) **EP 0 675 373 B1**

(12) **FASCICULE DE BREVET EUROPEEN**

(45) Date de publication et mention
de la délivrance du brevet:
**06.05.1999 Bulletin 1999/18**

(51) Int Cl.⁶: **G01S 3/48**, G01S 3/02

(21) Numéro de dépôt: **95400631.8**

(22) Date de dépôt: **22.03.1995**

(54) **Procédé et dispositif de radiogoniométrie simultanée à bande étroite**

Verfahren und Vorrichtung zur gleichzeitigen, schmalbandigen Peilung

Method and apparatus for simultaneous narrow band direction finding

(84) Etats contractants désignés:
DE GB IT

(30) Priorité: **29.03.1994 FR 9403665**

(43) Date de publication de la demande:
**04.10.1995 Bulletin 1995/40**

(73) Titulaire: **THOMSON-CSF
75008 Paris (FR)**

(72) Inventeurs:
• **Sename, Alain
F-92402 Courbevoie Cédex (FR)**

• **Remigereau, Alain-Jacques
F-92402 Courbevoie Cédex (FR)**
• **Verheul, Astrid
F-92402 Courbevoie Cédex (FR)**

(74) Mandataire: **Lincot, Georges et al
Thomson-CSF Propriété Intellectuelle,
13, Avenue du Président Salvador Allende
94117 Arcueil Cédex (FR)**

(56) Documents cités:
**EP-A- 0 125 838**          **GB-A- 2 142 202**
**US-A- 5 255 000**

**Description**

La présente invention conceme un procédé et un dispositif de radiogoniométrie simultanée à bande étroite.

Elle s'applique notamment à la radiosurveillance des ports et aéroports où un nombre limité de fréquences sont à surveiller et où l'utilisation de radiogoniomètres vient en complément aux moyens traditionnels d'aide à la navigation que sont les radars et les divers systèmes d'aide à l'atterrissage.

Un tel dispositif de radiogoniométrie est décrit par exemple dans le brevet US 5 255 000.

L'importance du trafic radioélectrique dans les ports et aéroports, la proximité à côté des radiogoniomètres de hangars, d'antennes et de bâtiments divers créent des perturbations radioélectriques et des phénomènes d'échos qui rendent les radiogoniomètres de plus en plus inefficaces.

Aussi la sélectivité médiocre de ces radiogoniomètres ne permet souvent pas de discriminer des avions situés en bout de piste d'un aéroport qui émettent des signaux forts relativement à des avions situés en limite de sensibilité des radiogoniomètres lorsqu'ils sont en approche à des distances de quelques centaines de km.

Pour résoudre ce problème il faudrait pouvoir disposer de radiogoniomètres capables d'effectuer des mesures sur plusieurs voies de réception en parallèle avec une protection entre canaux adjacents très importante de l'ordre de 80 à 90 dB.

Le but de l'invention est de résoudre ce problème.

A cet effet, l'invention a pour objet un procédé de radiogoniométrie simultanée à bande étroite du type consistant à effectuer des mesures de phases différentielles de signaux obtenus en sortie des divers couples d'antennes formés à partir d'un réseau de N antennes caractérisé en ce qu'il consiste à sélectionner successivement les signaux A et B provenant de chaque couple d'antennes

- à calculer pour chaque couple de signaux A et B les quantités

$$A_1^2 = (A + B)^2$$

$$A_2^2 = (A - B)^2$$

$$A_3^2 = (A - JB)^2$$

$$A_4^2 = (B - JA)^2$$

- à calculer la différence de phase $\varphi_{ij}$ entre chaque

couple de signaux A et B suivant la relation

$$\varphi_{ij} = \text{Arctg} \frac{\left(A_4^2 - A_3^2\right)}{A_1^2 - A_2^2}$$

et à déterminer l'angle θ d'arrivée de l'onde radioélectrique correspondante appliquée sur le réseau en recherchant le minimum de la somme de N écarts élevés au carré entre chaque différence de phase ($\varphi_{ij}$) de deux dipôles appartenant à chaque couple (i,j) et une phase de calibration ($\phi_{ij}$cal) correspondante lue dans une table de calibration donnant pour chaque couple les valeurs $\phi_{ij}$cal en fonction de l'angle θ d'arrivée de l'onde sur le réseau.

D'autres caractéristiques et avantages de l'invention apparaîtront à l'aide de la description qui suit faite en regard des figures annexées qui représentent:

- La figure 1 une illustration du procédé de radiogoniomètre selon l'invention sous la forme d'un organigramme.
- La figure 2 un graphe représentant la méthode de minimisation des moindres carrés mis en oeuvre par l'invention.
- La figure 3 un mode de réalisation du circuit d'acquisition de la figure 3.
- La figure 4 un mode de réalisation du circuit d'acquisition de la figure 3.

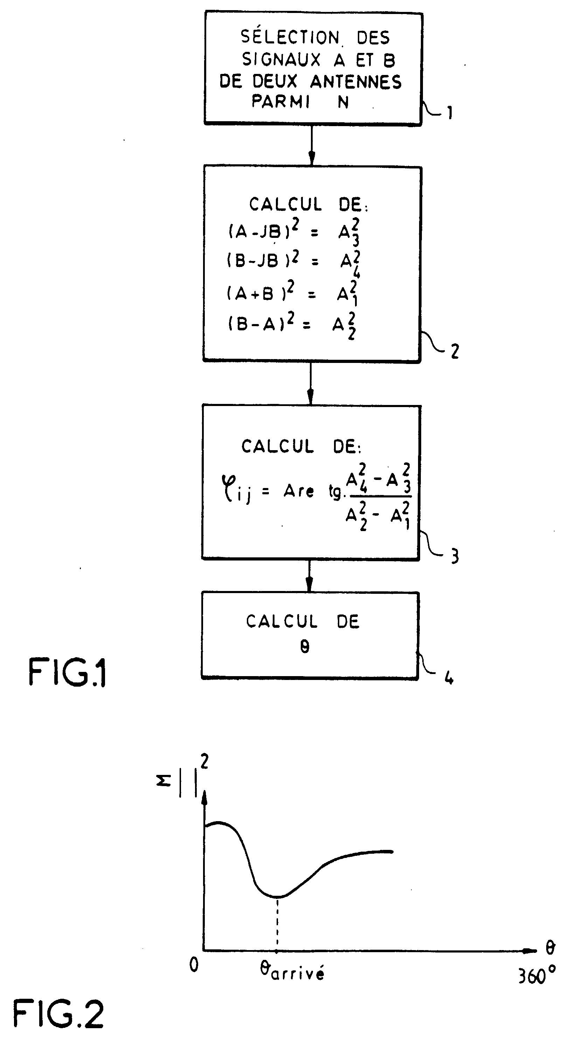

Le procédé selon l'invention consiste à effectuer de la manière figurée par les étapes 1, 2, 3 et 4 de la figure 1 des mesures de phases différentielles des signaux fournis par chaque couple d'antennes d'un réseau d'antenne.

Il consiste selon une première étape 1, à sélectionner les signaux A et B provenant de deux antennes du réseau parmi N.

En considérant que les signaux A et B sont de la forme

$$A = a(t).\ell^{j\omega t}$$

et

$$B = b(t).\ell^{j(\omega t + \varphi)}$$

les étapes 2 et 3 qui suivent consistent à effectuer les calculs des quantités $(A - JB)^2 = A_3^2$, $(B - JA)^2 = A_4^2$, $(A + B)^2 = A_1^2$, $(B - A)^2 = A_2^2$ et

$$\varphi = \text{Argtg}\left(\frac{A_4^2 - A_3^2}{A_1^2 - A_2^2}\right)$$

avec $J^2 = -1$.

Les étapes 1, 2 et 3 sont ensuite répétées autant de fois qu'il y a de phases différentielles à calculer. Ainsi pour un réseau de N = 5 antennes constituées par des dipôles situés aux sommets d'un pentagone, les calculs sont à répéter 5 fois. En désignant par $\varphi_1$, $\varphi_2$, $\varphi_3$, $\varphi_4$ et $\varphi_5$ les phases des signaux présents à la sortie de chaque dipôle, les phases différentielles calculées sont successivement :

$$\varphi_{13} = \varphi_3 - \varphi_1$$

$$\varphi_{24} = \varphi_4 - \varphi_2$$

$$\varphi_{35} = \varphi_5 - \varphi_3$$

$$\varphi_{41} = \varphi_1 - \varphi_4$$

$$\varphi_{52} = \varphi_2 - \varphi_5$$

Une recherche par la méthode des moindres carrés est alors effectuée et permet, par comparaison à des phases de calibration en angle et en fréquence du réseau d'antennes, de déterminer à l'étape 4 l'angle d'arrivée θ de l'onde radioélectrique reçue sur le réseau. Cette recherche s'effectue de la manière représentée à la figure 2 en minimisant la relation :

$$\sum_{i=1}^{i=5} \left(\varphi_{ij}\text{mesuré} - \phi_{ij}\text{cal}\right)^2$$

Pour cela une table de valeurs de phases différentielles calibrées $\phi_{ij}$cal est établie pour des valeurs de fréquences discrètes du plan de fréquence à surveiller en fonction de l'azimut θ d'arrivée de l'onde radioélectrique sur le réseau d'antenne.

Les valeurs d'azimut θ peuvent être établies avec un pas d'incrément de 4° par exemple.

La précision requise est obtenue par interpolation linéaire pour les fréquences et interpolation parabolique en angle pour les fréquences mesurées qui sont entre deux fréquences discrètes.

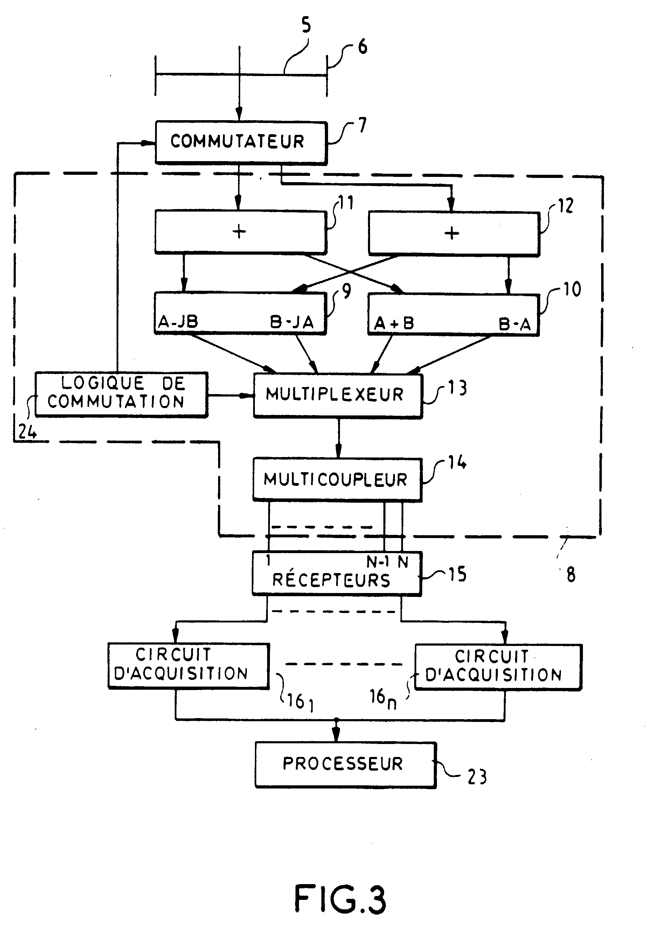

Un dispositif pour la mise en oeuvre du procédé selon l'invention est représenté à la figure 3. Il comporte un réseau d'antennes 5 formée par N dipôles 6 placés au sommet d'un polygone régulier. Chacun des dipôles 6 est relié à un commutateur 7 permettant des sélections de deux antennes parmi N. Les sorties du commutateur 7 sont connectées à un processeur représenté à l'intérieur d'une ligne formée en pointillés 8 réalisant par exemple, dans le cas d'une configuration N = 5 dipôles, la transformation de phase en les informations d'amplitudes élevées au carré $A_3^2$, $A_4^2$, $A_1^2$, $A_2^2$ et décrites précédemment. Pour cela deux circuits hybrides 9 et 10 permettent de calculer de façon connue les relations A-JB, B-JA, A+B et B-A. Des circuits d'aiguillage 11 et 12 interposés entre les sorties du commutateur 7 et les circuits hybrides 9 et 10 permettent la distribution des signaux A et B sur chaque circuit hybride. Un multiplexeur 13 placé en sortie des circuits hybrides 9, 10 transmet les informations d'amplitude par un multicoupleur 14 à destination d'un ensemble de n récepteurs 15.

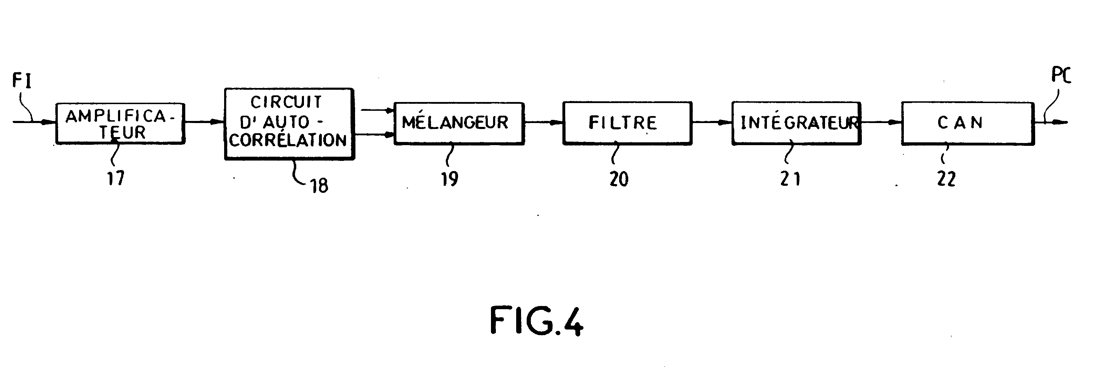

Les sorties des n récepteurs sont couplées respectivement à des circuits d'acquisition référencées $16_1$ à $16_n$. Chaque circuit d'acquisition $16_i$ comporte de la façon représentée à la figure 4 un amplificateur 17, un circuit d'autocorrélation 18, un mélangeur de fréquence 19, un filtre passe-bas 20, un intégrateur 21 et un convertisseur analogique-numérique 22, l'ensemble de ces éléments étant reliés dans cet ordre en série. Suivant cette réalisation le signal de fréquence intermédiaire FI fourni par chaque récepteur est appliqué, après amplification par l'amplificateur 17, sur l'entrée du circuit d'autocorrélation 18 qui extrait l'amplitude $A_i^i$ du signal. L'intégrateur 21 fournit l'énergie moyenne du signal pour l'appliquer à l'entrée du convertisseur analogique-numérique 22.

En retournant à la figure 3 chaque circuit d'acquisition $16_i$ fournit l'information numérique d'amplitude du signal obtenu en sortie du convertisseur 22 à un processeur 23 convenablement programmé pour calculer l'azimut θ d'arrivée du signal suivant les étapes 2 et 3 du procédé décrit précédemment. Une logique de commutation 24 assure la commande du commutateur 7 et du multiplexeur 13.

**Revendications**

1. Procédé de radiogoniométrie simultanée à bande étroite du type consistant à effectuer des mesures de phases différentielles de signaux obtenus en sortie des divers couples d'antennes formés à partir d'un réseau de N antennes caractérisé en ce qu'il consiste à sélectionner (1) successivement les signaux A et B provenant de chaque couple d'antennes

a) - à calculer (2) pour chaque couple de signaux A et B les quantités

$$A_1^2 = (A+B)^2$$

$$A_2^2 = (A - B)^2$$

$$A_3^2 = (A - JB)^2$$

$$A_4^2 = (B - JA)^2$$

b) - à calculer (3) la différence de phase $\varphi_{ij}$ entre chaque couple de signaux A et B suivant la relation

$$\varphi_{ij} = \text{Arctg} \frac{\left(A_4^2 - A_3^2\right)}{A_1^2 - A_2^2}$$

et

c) à déterminer (4) l'angle $\theta$ d'arrivée de l'onde radioélectrique correspondante appliquée sur le réseau en recherchant le minimum de la somme de N écarts élevées au carré entre chaque différence de phase ($\varphi_{ij}$) de deux dipôles appartenant à chaque couple (i,j) et une phase de calibration ($\phi_{ij}$cal) correspondante lue dans une table de calibration donnant pour chaque couple les valeurs $\phi_{ij}$cal en fonction de l'angle $\theta$ d'arrivée de l'onde sur le réseau.

2. Dispositif de radiogoniométrie simultanée à bande étroite comportant un réseau d'antennes (5) formé par N dipôles (6), chaque dipôle étant relié à un commutateur (7) pour la sélection de couples d'antennes caractérisé en ce qu'il comprend un premier processeur (8) pour calculer à partir des signaux A et B fournis par chaque couple d'antennes des signaux d'amplitudes $A_i = A + B$, $A_2 = A - B$, $A_3 = A - JB$ et $A_4 = B - JA$, et un deuxième processeur (23) couplé au premier processeur (8) par l'intermédiaire de circuits d'acquisition (16) pour calculer l'énergie moyenne des signaux d'amplitudes $A_1$, $A_2$, $A_3$ et $A_4$, le deuxième processeur déterminant l'azimut $\theta$ d'arrivée de l'onde radioélectrique appliquée sur le réseau d'antennes (5) générant les signaux A et B, en effectuant les étapes b) et c) du procédé selon la revendication 1.

3. Dispositif selon la revendication 2 caractérisé en ce que le circuit d'acquisition comprend un circuit d'autocorrélation (18) couplé à un convertisseur analogique numérique (22) par l'intermédiaire d'un intégrateur (21).

4. Dispositif selon l'une quelconque des revendications 2 et 3 caractérisé en ce que le réseau d'antennes est formé de N = 5 dipôles.

5. Dispositif selon la revendication 4 caractérisé en ce que les dipôles sont disposés aux sommes d'un pentagone régulier.

**Patentansprüche**

1. Verfahren zur simultanen Schmalband-Radiogoniometrie, das darin besteht, differentielle Phasenmessungen von Signalen auszuführen, die am Ausgang verschiedener Antennenpaare erhalten werden, die aus einer Gruppe aus N Antennen gebildet sind, dadurch gekennzeichnet, daß es darin besteht, nacheinander die Signale A und B, die von jedem Antennenpaar stammen, zu wählen (1),

(a) - für jedes Paar von Signalen A und B die Größen

$$A_1^{\,2} = (A + B)^2$$

$$A_2^{\,2} = (A - B)^2$$

$$A_3^{\,2} = (A - JB)^2$$

$$A_4^{\,2} = (B - JA)^2$$

zu berechnen (2),
(b) - die Phasendifferenz $\varphi_{ij}$ zwischen jedem Paar von Signalen A und B gemäß der folgenden Beziehung

$$\varphi_{ij} = \text{Arctg} \frac{\left(A_4^2 - A_3^2\right)}{A_1^2 - A_2^2}$$

zu berechnen (3) und
(c) - den Auftreffwinkel $\theta$ der entsprechenden funkelektrischen Welle zu bestimmen (4), die auf die Gruppe auftrifft, indem das Minimum der Summe aus N zum Quadrat erhobenen Abständen zwischen jeder Phasendifferenz ($\varphi_{ij}$) zweier zu jedem Paar (i,j) gehörenden Dipole und einer entsprechenden Kalibrierungsphase ($\phi_{ij}$cal), die in einer Kalibrierungstabelle gelesen wird, die für jedes Paar die Werte $\phi_{ij}$cal in Abhängigkeit vom Auftreffwinkel $\theta$ der Welle auf der Gruppe angibt, gesucht wird.

2. Vorrichtung zur simultanen Schmalband-Radiogoniometrie, mit einer aus N Dipolen (6) gebildeten Gruppenantenne (5), wobei jeder Dipol mit einem Kommutator (7) für die Wahl der Antennenpaare verbunden ist, dadurch gekennzeichnet, daß sie einen ersten Prozessor (8), der anhand der für jedes Antennenpaar gelieferten Signale A und B Amplitudensignale $A_1 = A + B$, $A_2 = A - B$, $A_3 = A - JB$ und $A_4 = B - JA$ berechnet, sowie einen zweiten Prozessor (23) enthält, der über Erfassungsschaltungen (16) mit dem ersten Prozessor (8) verbunden ist, um die mittlere Energie der Signale mit Amplituden $A_1$, $A_2$, $A_3$ und $A_4$ zu berechnen, wobei der zweite Prozessor den Auftreffazimut $\theta$ der funkelektrischen Welle, die auf die die Signale A und B erzeugende Gruppenantenne (5) auftrifft, bestimmt, indem er die Schritte b und c des Verfahrens nach Anspruch 1 ausführt.

3. Vorrichtung nach Anspruch 2, dadurch gekennzeichnet, daß die Erfassungsschaltung eine Autokorrelationsschaltung (18) enthält, die über einen Integrator (21) mit einem Analog/Digital-Umsetzer (22) verbunden ist.

4. Vorrichtung nach irgendeinem der Ansprüche 2 und 3, dadurch gekennzeichnet, daß die Gruppenantenne aus N = 5 Dipolen gebildet ist.

5. Vorrichtung nach Anspruch 4, dadurch gekennzeichnet, daß die Dipole an den Ecken eines regelmäßigen Fünfecks angeordnet sind.

**Claims**

1. Method of narrow-band simultaneous radio direction finding of the type consisting in performing differential phase measurements of signals output by the various antenna pairs formed from an array of N antennas, characterized in that it consists in successively selecting (1) the signals A and B originating from each antenna pair

a) - in calculating (2) for each pair of signals A and B the quantities

$$A_1^2 = (A+B)^2$$

$$A_2^2 = (A - B)^2$$

$$A_3^2 = (A - JB)^2$$

$$A_4^2 = (B - JA)^2$$

b) - in calculating (3) the phase difference $\varphi_{ij}$ between each pair of signals A and B according

to the relation

$$\varphi_{ij} = Arc\tan\frac{\left(A_4^2 - A_3^2\right)}{A_1^2 - A_2^2}$$

and

c) in determining (4) the angle $\theta$ of arrival of the corresponding radio wave applied to the array by searching for the minimum of the sum of N squared deviations between each phase difference ($\varphi_{ij}$) of two dipoles belonging to each pair (i,j) and a corresponding calibration phase ($\phi_{ij}$cal) read from a calibration table giving the values $\phi_{ij}$cal for each pair as a function of the angle $\theta$ of arrival of the wave at the array.

2. Narrow-band simultaneous radio direction finding apparatus comprising an antenna array (5) formed by N dipoles (6), each dipole being linked to a switch (7) for selecting antenna pairs, characterized in that it comprises a first processor (8) for calculating, from the signals A and B delivered by each antenna pair, signals of amplitudes $A_1=A+B$, $A_2=A-B$, $A_3=A-JB$ and $A_4=B-JA$, and a second processor (23) coupled to the first processor (8) by way of acquisition circuits (16) for calculating the average energy of the signals of amplitudes $A_1$, $A_2$, $A_3$ and $A_4$, the second processor determining the azimuth $\theta$ of arrival of the radio wave applied to the antenna array (5) generating the signals A and B, by performing steps b) and c) of the method according to Claim 1.

3. Apparatus according to Claim 2, characterized in that the acquisition circuit comprises an autocorrelation circuit (18) coupled to an analogue/digital converter (22) by way of an integrator (21).

4. Apparatus according to either one of Claims 2 and 3, characterized in that the antenna array is formed of N=5 dipoles.

5. Apparatus according to Claim 4, characterized in that the dipoles are arranged at the vertices of a regular pentagon.

SÉLECTION DES
SIGNAUX A ET B
DE DEUX ANTENNES
PARMI N

1

CALCUL DE:

$(A-JB)^2 = A_3^2$

$(B-JB)^2 = A_4^2$

$(A+B)^2 = A_1^2$

$(B-A)^2 = A_2^2$

2

CALCUL DE:

$\varphi_{ij} = \text{Arc tg.} \dfrac{A_4^2 - A_3^2}{A_2^2 - A_1^2}$

3

CALCUL DE
$\theta$

4

## FIG.1

## FIG.2

FIG.3

FI

AMPLIFICA-TEUR
17

CIRCUIT D'AUTO-CORRÉLATION
18

MÉLANGEUR
19

FILTRE
20

INTÉGRATEUR
21

CAN
22

PC

FIG.4

EP 0 675 373 B1